Europäisches Patentamt

European Patent Office

Office européen des brevets

(11) Numéro de publication: **0 058 874**
**A1**

(12) ## DEMANDE DE BREVET EUROPEEN

(21) Numéro de dépôt: **82100928.9**

(22) Date de dépôt: **09.02.82**

(51) Int. Cl.³: **H 02 G 7/12**

(30) Priorité: **13.02.81 FR 8102889**

(43) Date de publication de la demande: **01.09.82**
**Bulletin 82/35**

(84) Etats contractants désignés: **DE FR IT SE**

(71) Demandeur: **CERAVER Société anonyme dite:, 12, rue de la Baume, F-75008 Paris (FR)**

(72) Inventeur: **Thuillier, Denis, 3, rue de Pont à Mousson, F-03200 Vichy (FR)**
Inventeur: **Willem, Michel, Champ Coutay Abrest, F-03200 Vichy (FR)**

(74) Mandataire: **Weinmiller, Jürgen et al, Zeppelinstrasse 63, D-8000 München 80 (DE)**

(54) **Elément isolant électrique, notamment pour écarteur de phase, bras de rappel ou entretoise.**

(57) Elément isolant électrique, notamment pour écarteur de phase, bras de rappel ou entretoise.
Elément isolant électrique pour écarteur de phase, bras de rappel ou entretoise, de structure allégée.
Il comporte un barreau (10) en fibres de verre agglomérées présentant un évidement (45) au voisinage d'au moins une des ses extrémités. Des moyens sont prévus pour protéger de manière étanche la paroi du barreau et assurer la fixation simple d'un câble électrique associé (38).

EP 0 058 874 A1

## Elément isolant électrique, notamment pour écarteur de phase, bras de rappel ou entretoise

La présente invention concerne un élément isolant, destiné notamment à être utilisé comme écarteur de phase, bras de rappel ou entretoise.

On sait qu'un écarteur de phases est un long barreau isolant qui se place dans une portée entre deux pylônes, généralement à la moitié ou au tiers de la portée, et qui a pour fonction d'empêcher un rapprochement dangereux de deux conducteurs de phases différentes sous l'effet d'oscillations de grande amplitude ou d'efforts électrodynamiques, dûs par exemple à un courant de court-circuit.

Un bras de rappel est disposé entre une phase et la masse d'un support métallique pour ramener en position un conducteur ou une bretelle.

Une entretoise est destinée, quant à elle, à écarter les conducteurs d'un faisceau d'une même phase.

Dans ces applications, il est très important que l'élément isolant soit léger pour que son poids n'entraîne pas une augmentation sensible de la flèche des câbles et une modification, en forme de V, de la courbe formée par le conducteur qui en l'absence d'écarteurs est une chaînette.

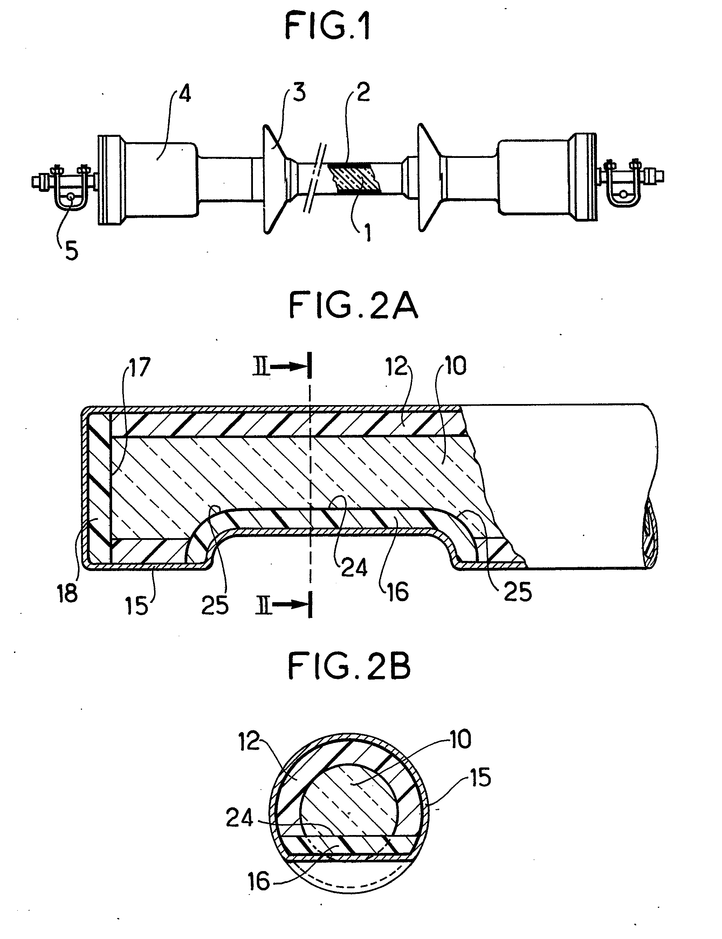

Aussi, pour gagner du poids, on a déjà proposé, au lieu d'utiliser des isolants traditionnels comme la porcelaine ou le verre, de prévoir un élément isolant du type de celui illustré à la figure 1. L'élément isolant est essentiellement constitué d'un jonc 1 en résine et fibres de verre, revêtu d'une gaine 2 en élastomère vulcanisé, résistant bien au cheminement et à l'érosion par les petits arcs électriques qui peuvent apparaître en surface, notamment sous l'effet de la pollution. Pour accroître la ligne de fuite et s'opposer au ruissellement de l'eau de pluie en surface, on peut disposer sur la gaine des ailettes 3 en élastomère analogue à celui constituant la gaine. Cet élastomère est par exemple l'EPDM (Ethylène - Propylène - Diène - Monomère).

Le jonc 1 reçoit généralement à ses extrémités un capot métallique 4 fixé sur lui par scellement ou sertissage ; sur le capot, on fixe une pince qui maintient le conducteur 5.

La présente invention a pour but d'alléger l'élément isolant précédent, notamment au niveau du dispositif de fixation du conducteur.

La présente invention a pour objet un élément isolant électrique, notamment pour écarteur de phase, bras de rappel ou entretoise, associé à un câble électrique, comprenant un barreau isolant en fibres de verre agglomérées revêtu d'une gaine isolante, et dont au moins une extrémité reçoit un dispositif de fixation pour ledit câble ; cet élément isolant est caractérisé par le fait que sa paroi présente, au voisinage de ladite extrémité un évidement orthogonal à la direction des fibres et dont la profondeur n'atteint pas les fibres neutres du barreau, ladite extrémité étant munie d'un premier et d'un second demi-manchon protecteurs rigides le premier présentant un bossage remplissant ledit évidement, des moyens prévus pour fixer lesdits demi- manchons entre eux ayant également pour fonction de fixer ledit câble contre ledit premier manchon.

Selon un premier mode de réalisation, les moyens pour fixer lesdits demi-manchons sont constitués par deux étriers, l'un des étriers portant un berceau pour le câble du côté opposé audit premier manchon.

Selon un autre mode de réalisation, c'est le bossage du premier manchon qui sert de berceau pour le câble ; dans ce cas les deux étriers qui retiennent les demi-manchons portent en outre un demi- collier de serrage en vue de l'application du câble dans son berceau.

Selon une autre variante du système précédent, le demi-collier de serrage est retenu d'une part par un desdits étriers, et d'autre part par une barrette mobile venant s'encliqueter dans ledit second manchon.

L'invention sera expliquée ci-après plus en détail à l'aide de plusieurs mises en oeuvre préférées et des dessins.

- La figure 1 représente l'état de la technique discuté ci-dessus.

- la figure 2A est une vue partielle en coupe longitudinale d'une extrémité d'un élément isolant selon l'invention,

-la figure 2B est une vue en coupe selon la ligne II-II de la figure 2A,

- la figure 3A montre en coupe longitudinale partielle un autre élément isolant selon l'invention associé à un conducteur électrique,

- la figure 3B est une vue en coupe selon la ligne III-III de la figure 3A,

- les figures 4 et 5 sont des vues en coupe longitudinale, variantes de la vue de la figure 3A.

On a représenté dans les figures 2A et 2B l'extrémité d'un barreau ou jonc 10 en fibres agglomérées, protégé par une gaine 12 en un élastomère tel que l'EPDM. A partir d'une distance de la face extrême 17, qui est fonction de l'effort de traction qu'aura à supporter l'élément isolant, on pratique dans la paroi du jonc 1 un évidement 24 orthogonal à la direction des fibres. Cet évidement présente, en coupe, la forme d'un plat terminé par deux arcs de cercle 25, mais ce pourrait être un seul arc de cercle ou une autre courbe directrice. Mais dans tous les cas, la profondeur de cet évidement ne doit pas atteindre les fibres qui par l'effet du flambage sont sollicitées en traction.

Afin de protéger cet évidement, on colle sur lui une feuille 16 en un élastomère de même composition que la gaine 12, de façon à réaliser l'étanchéité entre la feuille 16 et la gaine 12. On effectue la même opération contre la face 17 du jonc en collant une rondelle 18 en élastomère.

L'ensemble étanche obtenu est de préférence revêtu d'une enveloppe étanche supplémentaire 15 en élastomère.

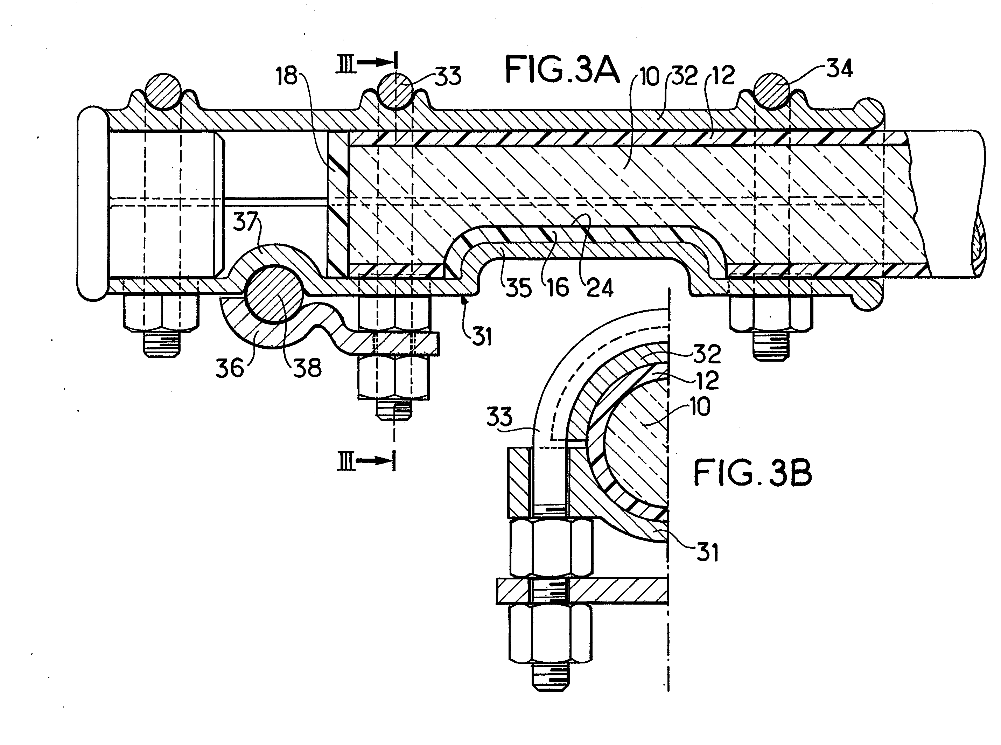

Les figures 3A et 3B montrent un premier exemple d'entretoise ou d'écarteur de phase comportant un jonc usiné et traité comme celui des figures 2A et 2B. Il présente un premier demi-manchon 31 et un second demi-manchon 32 solidarisés au jonc 10 gainé par l'intermédiaire de deux étriers 33 et 34. Le demi-manchon 31 présente un bossage 35 venant remplir l'évidement 24 gainé par la feuille 16, et un bossage 37 dépassant l'extrémité de la rondelle 18. L'étrier 33 porte un berceau 36 définissant avec le bossage 37 un logement pour un câble 38.

Il faut remarquer qu'un écarteur de phase est soumis à ses extrémités à des efforts de traction, et à des efforts de compression beaucoup plus importants que les efforts de traction : il en résulte un flambage du jonc. Ce flambage soumet les fibres du jonc situées du côté convexe à des contraintes de traction, ou de légère compression, et les fibres situées du côté concave à de fortes contraintes de compression. L'évidement 24 a été réalisé non pas du côté des fibres tendues, mais du côté des fibres comprimées, ce qui ne présente aucun inconvénient. Le câble 38 est maintenu sur l'écarteur du même côté que l'évidement.

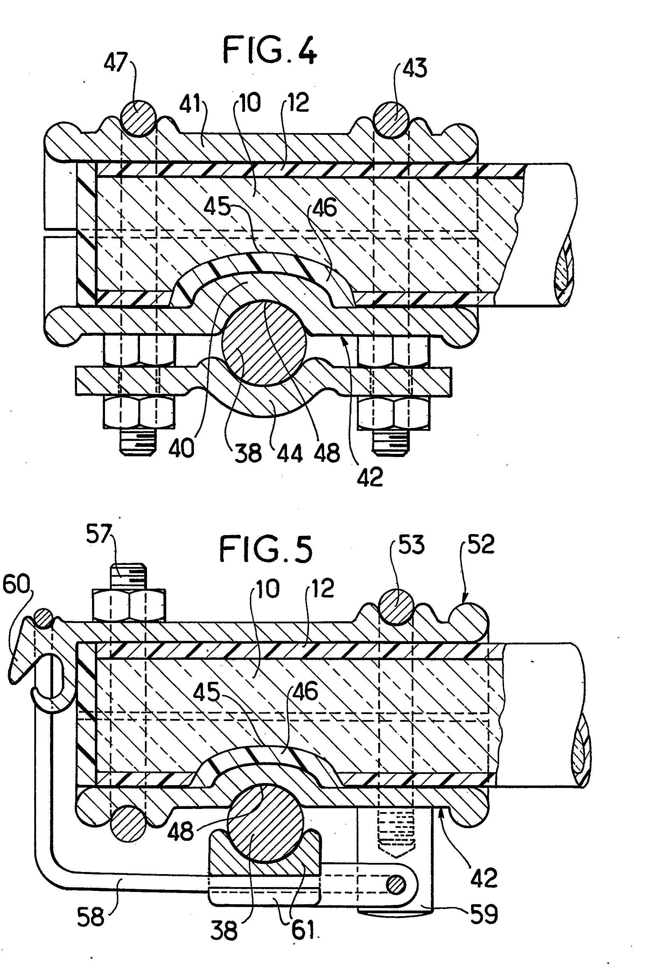

La figure 4 illustre un mode de réalisation basé sur le même principe où l'évidement 45 protégé par un revêtement 46 est rempli d'un bossage 40 présenté par le demi-manchon 42. Ce dernier est fixé au demi-manchon 41 par des étriers 43 et 47. Le bossage 40 présente une courbure 48 lui permettant de faire berceau pour le câble 38, maintenu par ailleurs dans un demi-collier de serrage 44 solidaire des deux étriers 47 et 43.

La figure 5 est une variante de la figure 4. Le premier demi-collier 42 est identique à celui de la figure 4. Seuls changent les moyens de fixation au second demi-collier 52 et au câble 38. Deux carrés 59 filetés intérieurement forment d'une part écrou ou contre-écrou pour l'étrier 53 et d'autre part paliers pour un fil à ressort 58. Ce dernier forme lui-même axe de rotation et supporte une cale d'appui 61 maintenant le câble 38 contre son berceau. Le demi-manchon 52 se prolonge par un bossage 60 de retenue du fil 58 et il est solidarisé au demi-manchon 51 par un second étrier 57.

Toutes les variantes précédentes de l'invention sont plus simples et plus légères que les solutions adoptées antérieurement.

Dans le cadre de l'invention, l'un des demi-manchons pourra être remplacé par un cylindre fendu coopérant avec une cale complémentaire ayant la même fonction que l'autre demi-manchon.

REVENDICATIONS

1/ Elément isolant électrique, notamment pour écarteur de phase, bras de rappel ou entretoise, associé à un câble électrique, comprenant un barreau isolant (10) en fibres de verre agglomérées revêtu d'une gaine isolante, et dont au moins une extrémité reçoit un dispositif de fixation pour ledit câble (38), caractérisé par le fait que sa paroi présente, au voisinage de ladite extrémité un évidement (45) orthogonal à la direction des fibres et dont la profondeur n'atteint pas les fibres qui par l'effet de flambage sont susceptibles d'être sollicitées en traction, ladite extrémité étant munie d'un premier (42) et d'un second (41) demi-manchons protecteurs rigides, le premier (42) présentant un bossage (40) remplissant ledit évidement (45), des moyens prévus pour fixer lesdits demi-manchons entre eux ayant également pour fonction de fixer ledit câble (38) contre ledit premier manchon (42).

2/ Elément isolant selon la revendication 1, caractérisé par le fait que les moyens pour fixer lesdits demi-manchons (41, 42) sont constitués par deux étriers (43, 47), l'un des étriers portant un berceau pour le câble du côté opposé audit premier manchon (42).

3/ Elément isolant selon la revendication 1, caractérisé par le fait que le bossage (40) dudit premier manchon (42) sert de berceau (48) pour ledit câble (38) et que lesdits moyens pour fixer lesdits demi-manchons sont deux étriers (43, 47) qui portent en outre un demi-collier de serrage (44) pour appliquer ledit câble dans son berceau.

4/ Elément isolant selon la revendication 1, caractérisé par le fait que le bossage (48) dudit premier manchon (42) sert de berceau pour ledit câble (38) et que lesdits moyens pour fixer lesdits demi-manchons (52, 42) sont deux étriers (57, 53) dont l'un porte une cale de serrage (61) pour ledit câble (38), une barrette mobile venant s'encliqueter dans ledit second manchon pour immobiliser ledit câble.

5/ Elément isolant selon l'une des revendications précédentes, caractérisé par le fait que la paroi dudit barreau est entièrement munie d'un revêtement étanche (12) en élastomère.

## FIG.1

## FIG.2A

## FIG.2B

FIG.3A

FIG.3B

0058874

FIG.4

FIG.5

Office européen
des brevets

**RAPPORT DE RECHERCHE EUROPEENNE**

0058874

Numéro de la demande

82 10 0928

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | <u>FR - A - 2 191 222</u> (TRANSMISSION)<br><br>* page 1, lignes 19-27; page 2, lignes 28-31, 34-38; page 3, lignes 17-28; figure 4 *<br><br>--- | 1 | H 02 G 7/12 |
| Y | <u>DE - A - 2 451 758</u> (BROWN, BOVERI)<br><br>* page 8, alinéa 1; figures 1, 4 *<br><br>--- | 1 | |
| A | <u>DE - A - 1 515 486</u> (BROWN, BOVERI)<br><br>* page 1, aliné 1; page 3, alinéas 3,5 *<br><br>--- | 1,5 | |
| A | <u>FR - A - 2 426 318</u> (CERAVER)<br><br>* page 3, lignes 33-49; page 4, lignes 1-3; figure 1 *<br><br>------- | 4 | |

|  |  |  | DOMAINES TECHNIQUES RECHERCHES (Int. Cl. ³) |
|---|---|---|---|
|  |  |  | H 02 G 7/00<br>H 01 B 17/00 |

Le présent rapport de recherche a été établi pour toutes les revendications

| Lieu de la recherche | Date d'achèvement de la recherche | Examinateur |
|---|---|---|
| La Haye | 14.06.1982 | TIELEMANS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82